# EUROPÄISCHE PATENTANMELDUNG

(11) **EP 1 669 336 A1**
(43) Veröffentlichungstag der Anmeldung: **14.06.2006**
(21) Anmeldenummer: 05026626.1
(22) Anmeldetag: 06.12.2005
(51) Int. Cl.: C05F 11/02, C05F 1/00

(54) **Langzeitdünger/Bodenverbesserer mit wildabweisender Wirkung**

(30) Priorität: 07.12.2004 DE 102004058934
(71) Anmelder: Moser, Josef, D-85435 Erding (DE)
(72) Erfinder: Moser, Josef, D-85435 Erding (DE)
(74) Vertreter: Winter, Brandl, Fürniss, Hübner Röss, Kaiser, Polte Partnerschaft Patent- und Rechtsanwaltskanzlei

(57) **Zusammenfassung**

Die vorliegende Erfindung betrifft einen Langzeitdünger/Bodenverbesserer enthaltend tierische Ausscheidungsprodukte und eine Masse aus vorwiegend pflanzlichem Ausgangsmaterial, welche durch Zerkleinern des Augangsmaterials, wenigstens überwiegend anaerobes Fermentieren des zerkleinerten Ausgangsmaterials, Homogenisieren des fermentierten Materials und Eindicken erhältlich ist, dadurch gekennzeichnet, daß er wenigstens ein Wildabweisungsmittel enthält.

## Beschreibung

Die vorliegende Erfindung betrifft einen Langzeitdünger/Bodenverbesserer gemäß Anspruch 1, die Verwendung des Langzeitdüngers gemäß Anspruch 16, ein Verfahren zur Herstellung eines solchen Langzeitdüngers gemäß Anspruch 17 sowie ein Verfahren zum Düngen und zum gleichzeitigen Schützen von Grünpflanzen vor Wildverbiß gemäß Anspruch 26.

Fast die Hälfte des bayerischen Gebirgsraumes, nämlich 250 000 ha, ist von Wald bedeckt; 60% dieser Fläche wiederum sind als Schutzwald ausgewiesen. Im Rahmen der Waldfunktionskartierung wurden verschiedene Schutzfunktionen des Waldes im einzelnen erfaßt.

Besonders große Bedeutung kommt danach vom Flächenumfang her dem Schutz vor Bodenerosion und Hochwasser zu.

Beispielsweise kann nur ein stabiler und gesunder Bergwald die an ihn gestellten Anforderungen bestmöglich erfüllen.

Hierzu gehört ein enges Nebeneinander möglichst aller Baumgenerationen, von der Waldverjüngung bis hin zum uralten Baumriesen. Haben die Wälder jedoch ein hohes Alter erreicht, ohne daß sich rechtzeitig Nachwuchs eingestellt hat, dann ist es fraglich, ob sich auch in ukunft Waldbestockung beispielsweise auf einem Steilhang halten kann.

Es kann im Hochgebirge bis zu 50 Jahren und länger dauern, bis die Jungbäume im Schutz der Alten soweit aus dem Gefährdungsbereich herangewachsen sind, daß sie in der Lage sind, selbst Schutzaufgaben zu übernehmen.

In einer lebenden Grünkultur fallen die Blätter alljährlich zu Boden, sterben ab, unzählige Bodenlebewesen leben dort und sterben ab, und über dem Boden hinterlassen lebende Tiere Exkremente, Urin, Federn und Haare.

Aber nicht nur organische Stoffe verrotten unter den Bäumen, auch die im Boden befindlichen Mineralien und Gesteine verwittern und liefern den Wurzeln die nötigen Nährstoffe, so dass sich Pflanzen im Laufe der Jahre gut entwickeln können. Dazu kommt die Arbeit der Bodentiere, wie Asseln, Springschwänze und viele andere, die sowohl verrottende organische Stoffe als auch mineralische Verwitterungsprodukte aufnehmen, verdauen und schließlich als stabile Humusverbindungen ausscheiden.

Wird aber einer solchen Grünkultur beispielsweise durch das Fällen von Bäumen oder durch das teilweise mehrfache Ernten von Früchten solch wertvolle Biomasse entnommen, so muß dieser Biomasseverlust durch den Zusatz von Düngemitteln ausgeglichen werden.

Ähnlich verhält es sich, wenn Grünkulturen an Orten angepflanzt werden, wo noch kein ausreichend starkes Ökosystem vorhanden ist, um diese zusätzlichen Anpflanzungen mit Nähstoffen zu versorgen.
Viele dieser für Pflanzen lebenswichtigen Stoffe sind jedoch sehr gut wasserlöslich und versickern daher bei Regen schnell im Boden. Oft erreichen sie sehr schnell tiefere Bodenschichten, in denen sie für die Wurzeln der Pflanzen nicht mehr erreichbar sind.

Daher muß häufig nachgedüngt werden, wobei die Pflanzen von der zur Verfügung gestellten Düngemittelmenge allerdings nur einen Teil aufnehmen können, bevor das Düngemittel zu tiefe Bodenschichten erreicht hat.

Die somit erfolgende Überdüngung der Pflanzen belastet das Grundwasser in erheblichem Ausmaße.

Ferner verursacht sie unnötige Kosten.

Um dieses Problem zu überwinden wurden im Stand der Technik Langzeitdünger entwickelt, die ihren Düngemittelgehalt nur langsam freisetzen und somit die Pflanzen stets mit einer gerade ausreichenden Düngemittelmenge versorgen.

Hierzu werden die Düngemittel beispielsweise in ummantelter Form zur Verfügung gestellt, wobei die Ummantelung für eine kontrollierte Freisetzung der Düngemittel sorgt.

Solch ein Düngemittel ist beispielsweise in US 6139597 B1 offenbart.

Ein weiteres Hauptproblem bei Neuanpflanzungen und eine Hauptursache für das Ausbleiben einer Verjüngung bei vielen Schutzwaldflächen liegt darin, daß die jungen Pflänzchen unter dem starken Verbiß von Hirschen, Gemsen und Rehen leiden.

Keimlinge oder sehr kleine Bäume fallen dem Verbiß zum Opfer. Bei den etwas größeren Pflanzen führt wiederholter Verbiß zum allmählichen Absterben.

Besonders stark durch Verbiß gefährdet sind junge Bäume auf sonnseitigen Steillagen, die im Winter und Frühjahr durch das Abrutschen oder frühe Abschmelzen der Schneedecke besonders gut für das Schalenwild, insbesondere für das Gamswild zugänglich sind.

Zum Schutz der Waldverjüngung vor Wildverbiß und zum Schutz insbesondere von jungen Grünkulturen werden im Stand der Technik Drahtummantelungen und Zäune eingesetzt.

Diese sind jedoch sehr teuer und zudem arbeitsintensiv aufzustellen, zu pflegen und schließlich wieder abzubauen.

Insbesondere in Steillagen werden Zäune von Schneerutschen oder Lawinen leicht zerstört, so daß ein sicherer Schutz der Verjüngung nicht möglich ist.

Es gibt daher im Stand der Technik einen dringenden Bedarf für ein Mittel, daß Grünpflanzenkulturen mit den notwendingen Nähstoffen versorgt, ohne dabei das Grundwasser zu belasten, und gleichzeitig die Grünpflanzen vor Wildverbiß schützt.

Aufgabe der vorliegenden Erfindung war es daher, einen umweltfreundlichen Langzeitdünger zur Verfügung zu stellen, der Grünpflanzen mit Nährstoffen versorgt, ohne dabei das Grundwasser zu belasten, der gleichzeitig vor Wildverbiss schützt und der einfach und preiswert herzustellen ist.

Diese Aufgabe wird durch einen Langzeitdünger gemäß Anspruch 1, durch eine Verwendung des Langzeitdüngers gemäß Anspruch 16, durch ein Verfahren zur Herstellung eines solchen Langzeitdüngers gemäß Anspruch 17 sowie durch ein Verfahren zum Düngen und zum gleichzeitigen Schützen von Grünpflanzen vor Wildverbiß gemäß Anspruch 26 gelöst.

Im folgenden werden einzelne Ausführungsformen der vorliegenden Erfindung vorgestellt. Es ist dem Fachmann dabei klar, daß er sämtliche beschriebenen Ausführungsformen der Erfindung beliebig miteinander kombinieren kann, ohne dabei vom Umfang der vorliegenden Erfindung abzuweichen.

Erfindungsgemäß wird ein Langzeitdünger zur Verfügung gestellt, der tierische Ausscheidungsprodukte, eine Masse aus vorwiegend pflanzlichem Ausgangsmaterial, welche durch Zerkleinern des Ausgangsmaterials, wenigstens überwiegend anaerobes Fermentieren des zerkleinerten Ausgangsmaterials, Homogenisieren des fermentierten Materials und Eindicken erhältlich ist und wenigstens ein Wildabweisungsmittel enthält.

Die in dem Langzeitdünger verwendete Masse aus vorwiegend pflanzlichem Ausgangsmaterial, im folgenden "Bioplast" genannt, wird in der deutschen Patentanmeldung P 44 24 403 ausführlich beschrieben, auf die hiermit vollinhaltlich Bezug genommen wird.

Bei der Herstellung von Bioplast entstehen keine schädlichen, toxischen oder schwer entsorgbare Abfälle.

Seine Herstellung ist kostengünstig, da als Ausgangsmaterial für Bioplast praktisch alle pflanzlichen Materialien, d.h. auch alle Abfälle aus Garten, Landwirtschaft und Wald, welche ansonsten kaum verwendbar sind, einsetzbar sind.

Bioplast hat den Vorteil, daß es selbst über einen Längeren Zeitraum biologisch abbaubar ist und aufgrund seiner pflanzlichen Herkunft selbst als Düngemittel wirkt und zudem die Fähigkeit hat, die tierischen Ausscheidungsprodukte zu binden, so daß auch sie erst langsam mit der Zeit freigesetzt werden.

Somit stellt die Kombination aus Bioplast und tierischen Ausscheidungsprodukten einen umweltfreundlichen biologischen Langzeitdünger dar.

Der erfindungsgemäße Langzeitdünger enthält weiterhin ein Wildabweisungsmittel. Auch dieses wird durch Bioplast gebunden und bleibt daher für lange Zeit präsent und übt seine wildabweisende Wirkung aus.

Somit ist es dem vorliegenden Erfinder in überraschender Weise gelungen, einem umweltfreundlichen, biologischen Langzeitdünger eine wildabweisende Wirkung zu verleihen.

Das Wildabweisungsmittel kann wildabweisende Geruchsstoffe, wildabweisende Geschmacksstoffe, für das Wild unverträgliche Stoffe oder Mischungen daraus enthalten.

Hierbei kann das Wildabweisungsmittel ein synthetisches Wildabweisungsmittel oder ein natürliches Wildabweisungsmittel sein.

Natürliche Wildabweisungsmittel sind jegliche natürlich vorkommenden Substanzen oder Substanzmischungen, z. B. nicht schwermetallbelastete Klärschlämme, deren Geruch, Geschmack oder Verträglichkeit Wild abstößt.

Bevorzugte natürliche Wildabweisungsmittel enthalten Bestandteile oder Ausscheidungen von Lebewesen, die bevorzugt natürliche Feinde des Wildes darstellen, das den Wildverbiss verursacht.

Insbesondere werden Tierepithelien, wie beispielsweise Federn, Fischbestandteile, Säugetierhaare, einschließlich menschlicher Haare, insbesondere Hunde-, Wolfs- oder Bärenhaare oder Mischungen daraus verwendet.

Ebenso denkbar sind auch pflanzliche wildabweisende Bestandteile, deren Geruch, Geschmack oder Verträglichkeit Wild abstößt. Bevorzugt werden hier Pflanzen verwendet, die sich durch ihren Geruch oder ihren Geschmack vor dem Wild schützen.

Auch diese natürlichen wildabweisenden Stoffe sind bevorzugt Abfallprodukte, die ansonsten nicht oder nur schwer verwertbar wären.

Die Verwertung dieser Stoffe als Wildabweisungsmittel vermeidet deren Entsorgung und die dadurch entstehenden Kosten.

Daher ist die Beschaffung dieser Mittel äußerst preiswert.

Auch belasten sie die Umwelt nicht, da sie lediglich in ihren natürlichen Kreislauf zurückgeführt werden und somit ein natürliches Recycling unterlaufen.

Ein synthetisches Wildabweisungsmittel ist eine künstlich hergestellte Substanz oder Substanzmischung, deren Geruch, Geschmack oder Verträglichkeit Wild abstößt.

Bevorzugt werden synthetische Wildabweisungsmittel, die die chemischen Verbindungen enthalten, die auch in natürlichen Wildabweisungsmitteln enthalten sind.

Besonders bevorzugt können Repellentien verwendet werden.

Verwendbare tierische Ausscheidungsprodukte sind Kot und Urin, insbesondere von Säugetieren, einschließlich Menschen, bevorzugt von Haustieren und besonders bevorzugt von Tieren aus landwirtschaftlicher Haltung, wie von Schweinen, Ochsen, Kühen, Pferden, Schafen, Heidschnucken oder Ziegen.

Ebenfalls sind Ausscheidungsprodukte von Geflügel, wie Hühnern, Gänsen, Puten, Truthähnen oder Enten bevorzugt.

Weiterhin bevorzugt werden diese Ausscheidungsprodukte in der Form von Gülle verwendet.

In einer weiteren Ausführungsform der Erfindung kann der Langzeitdünger weiterhin mindestens einen Zuschlagsstoff enthalten.

Dieser Zuschlagsstoff kann jegliches Mittel sein, daß eingesetzt wird, um dem Langzeitdünger zusätzliche Eigenschaften zu verleihen oder dessen bestehende Eigenschaften zu verstärken oder zu ändern.

Bevorzugt sind ein weiteres Düngemittel, ein Bindemittel, ein Trägermaterial, ein Gewicht verleihendes Mittel, ein Struktur verleihendes Mittel, ein Klebemittel, ein Farbstoff, ein Duftstoff, ein Geschmacksstoff, Schädlingsbekämpfungsmittel, Mikroorganismen, ein Konservierungsstoff, ein Medikament oder Mischungen daraus.

Der Zuschlagsstoff kann Tierbestandteile, mineralische Bestandteile, pflanzliche Bestandteile, synthetische Bestandteile oder Mischungen daraus enthalten.

Bevorzugt umfassen die Tierbestandteile hierbei Tierepithelien wie Federn, Fischbestandteile, Säugetierhaare, einschließlich menschliche Haare, insbesondere Hunde-, Wolfs- oder Bärenhaare oder Mischungen daraus.

Auch hierbei handelt es sich wiederum um Materialien, die Abfallprodukte darstellen und daher kostengünstig erhältlich sind. Ferner entfällt die Entsorgungsproblematik, und die tierischen Zuschlagsstoffe unterlaufen ein natürliches Recycling.

Die mineralischen Bestandteile sind bevorzugt Steinmehl, Tonmehl, Kieselgur, insbesondere mit Produkten aus der Bierherstellung beladener Kieselgur oder Mischungen davon.

Sie verleihen dem Langzeitdünger Schwere und zusätzliche Mineralstoffe, die für die Düngung wichtig sind. Die Schwere sorgt dafür, daß der Langzeitdünger auch bei Niederschlägen und/oder bei Wind den Ort, auf den er aufgebracht wurde, nicht verläßt.

Die pflanzlichen Bestandteile enthalten bevorzugt faserhaltige Materialien, vorzugsweise Holzwolle, Flachs, Bananenfaser, Kokos, Sisal, Baumfasern, Zweige, Blätter, Nadeln, Wurzeln, Früchte, Stengel, Schalen, Schoten, Blüten, Knollen, Rinde, Holz, Mark, Gräser, Unkraut und/oder Pflanzenfasern, feinkörnige Materialien, insbesondere Holzmehl und/oder Sägemehl, sowie deren Mischungen

Faserhaltige Materialien verleihen dem Langzeitdünger eine innere Struktur und bilden so eine Matrix, die die einzelnen Düngemittelkörnchen zusammenhält.

Feinkörniges Material, wie Holzmehl oder Sägemehl können als Bindemittel dienen.

Als Rieselhilfsmittel, um die einzelnen Pellets voneinander getrennt zu halten, kann Asche, Steinmehl oder andere trockene, mineralische Mehle oder Sand verwendet werden.
Auch diese Naturprodukte werden wieder in ihren biologischen Kreislauf bodenverbessernd zurückgeführt und belasten so die Umwelt nicht.

Weitere Materialien wie Wollstaub, Wachs, Stärke, Öl, Harz, Zucker, Torf, Muschelschalen und/oder Latex-Stoff oder Mischungen daraus können ebenso in dem Zuschlagsstoff enthalten sein.

Hierbei verhindern Wachse, Öle und Harze, daß Wasser zu schnell in die Düngemittelpartikel eindringt. So werden Düngemittel jeweils nur aus der äußersten Schicht der Düngemittel freigesetzt.

Stärke und Zucker können als Nahrungsquelle für Mikroorganismen dienen, die wiederum wertvollen Humus produzieren.

Eine weitere bevorzugte Ausführungsform der Erfindung ist dadurch gekennzeichnet, daß die synthetischen Bestandteile Klebemittel, Bindemittel, Konservierungsmittel, Trägermaterialien oder Mischungen davon umfassen.

Hierbei kann das Konservierungsmittel eine organische Säure, vorzugsweise Essigsäure, Zitronensäure, Weinsäure, Ameisensäure, Milchsäure, Propionsäure, Benzoesäure, Sorbinsäure, Salicylsäure, sowie deren Mischungen umfassen.

Diese Konservierungsmittel können sowohl die Lagerbeständigkeit des erfindungsgemäßen Langzeitdüngers erhöhen als auch verhindern, daß der Dünger nach seinem Ausbringen aufgrund seines hohen Nährstoffanteiles beginnt, zu schimmeln oder zu faulen.

Gemäß einer weiteren bevorzugten Ausführungsform der Erfindung ist der erfindungsgemäße Langzeitdünger dadurch gekennzeichnet, daß er sich vollständig biologisch abbaut.

Die biologische Abbaubarkeit des erfindungsgemäßen Langzeitdüngers hat den Vorteil, daß keine Rückstände verbleiben, die die Umwelt belasten und außerdem das Gelände, auf dem der erfindungsgemäße Dünger ausgebracht wurde, nicht optisch verunstaltet wird.

Gemäß einer weiteren bevorzugten Ausführungsform der vorliegenden Erfindung wird der erfindungsgemäße Langzeitdünger als Streudünger, insbesondere in der Form eines Granulates, zur Verfügung gestellt.

Die Streufähigkeit des Düngers ermöglicht eine bequeme Art der Ausbringung und eine leichte Dosierbarkeit.

Hierbei weist der Streudünger eine Pelletgröße mit einem Durchmesser von ca. 0.1 mm - 5 cm, vorzugsweise von ca. 1 mm bis 1 cm auf.

Eine solche Pelletgröße ermöglicht ein relativ staubfreies Abfüllen und Ausbringen, sowie eine an den jeweiligen Zweck angepaßte Dosierung.

Die optimale Dosierung hängt von vielen Faktoren ab und muß daher vom Fachmann im Einzelfall bestimmt werden.

Ausgewählte wichtige Faktoren sind die Langzeitdüngerzusammensetzung, die Menge der erforderlichen Düngung, die Häufigkeit des Auftretens von Wild in dem zu düngenden Gebiet, die Niederschlagshäufigkeit, die Bepflanzungsart, der Zustand der Grünkultur, die Jahreszeit, die Temperatur oder die Pflanzendichte.

Bevorzugt werden ca. 1-3 mal jährlich ca. 1-500 g/m² erfindungsgemäßer Langzeitdünger, besonders bevorzugt 1 mal jährlich 10-100 g/m² erfindungsgemäßer Langzeitdünger ausgebracht.

Eine Ausführungsform der vorliegenden Erfindung ist die Verwendung eines erfindungsgemäßen Langzeitdüngers zum Düngen und/oder zur Einschränkung oder Verhinderung von Wildverbiß bei Grünpflanzenkulturen, wie Wäldern, insbesondere bei Anpflanzungen, bei Jungpflanzen sowie bei der Pflanzenaufzucht, insbesondere in schwer zugänglichen Regionen, wie im Hochgebirge.

Hierdurch können die Verjüngung des Waldes gefördert und neue Bepflanzungsgebiete erschlossen werden.

Nutzpflanzenkulturen können umweltfreundlich gedüngt und gleichzeitig vor Wildverbiß geschützt werden.

Die Verwendung des erfindungsgemäßen Langzeitdüngers düngt und schützt Pflanzen ebenso vor Verbiß durch Haustiere, beispielsweise durch Kühe oder Schafe, was beispielsweise im Gebirge ein großes Problem darstellt, da dort freilaufende Almkühe und Schafe neben den Almwiesen auch Jungpflanzen anfressen.

Eine weitere Ausführungsform der vorliegenden Erfindung ist ein Verfahren zur Herstellung eines erfindungsgemäßen Langzeitdüngers, die folgenden Schritte umfassend:
- Herstellen einer Masse aus vorwiegend pflanzlichem Ausgangsmaterial, die folgenden Schritte umfassend:
   - Zerkleinern des Ausgangsmaterials,
   - wenigstens überwiegendes anaerobes Fermentieren des zerkleinerten, gegebenenfalls angefeuchteten Materials und
   - Homogenisieren des fermentierten Materials, um die Masse zu erhalten, und
- Mischen der Masse aus vorwiegend pflanzlichem Ausgangsmaterial mit den tierischen Ausscheidungsprodukten und wenigstens einem Wildabweisungsmittel.

Zur Herstellung von Bioplast wird vollinhaltlich auf die deutsche Patentanmeldung P 44 24 403 des Anmelders verwiesen.

Als Ausgangsmaterial hierfür können prinzipiell alle pflanzlichen Materialien verwendet werden. Insbesondere sind dafür faserhaltige Materialien, wie Blätter, Zweige, Nadeln, Wurzeln geeignet. Es können auch Früchte, Stengel, Schalen, Schoten, Knollen, Blüten, Rinde, Holz, Mark, Gräser, Getreide, Unkraut, Fasern, usw., sowie deren beliebige Mischungen verwendet werden.

Die pflanzlichen Ausgangsmaterialien können dabei auch mit tierischen oder mineralischen Anteilen vermischt sein. Diese Anteile sind teilweise natürlich in dem pflanzlichen Material vorhanden, wie Insekten, Nematoden, Tierepithelien, wie z.B. Federn, Tierexkremente, Gülle usw. sowie Erde, Ton, Lehm, Sand, usw.; oder können auch künstlich zugesetzt werden.

Das Zerkleinern kann durch Häckseln, Zermahlen, Zerreiben, aber auch auf jede andere geeignete Art geschehen.

Die überwiegend anaerobe Fermentation kann durch Vergären, insbesondere Milchsäuregärung, Silieren, Kompostieren, sowie andere biologischen Umsetzungen, insbesondere solche unter Beteiligung von Mischbiozönosen, erreicht werden.

Sind die Ausgangsmaterialien sehr trocken, so ist es vorteilhaft, sie vor der Fermentation anzufeuchten.

Die Fermentation wird vorzugsweise unter Anwendung von Druck ausgeführt. Dieses kann beispielsweise durch Zusammenpressen des Ausgangsmaterials in einer Tonne, auf welche ein Deckel aufgepreßt wird, erfolgen.

Bei schwer zu fermentierenden Materialien, wie z.B. Kiefernnadeln, können Gräser oder andere leichter zu vergärende Materialien als Starter und/oder Beschleuniger der Fermentation zugesetzt werden. Das zu fermentierende Material kann auch erwärmt werden, um die Zersetzung zu beschleunigen.

Die Fermentation dauert vorzugsweise ca. 14 Tage. Sie kann aber auch durch Anwendung von höherem Druck und/oder höherer Temperatur beschleunigt werden. Bei Bedarf kann sie aber auch über einen längeren Zeitraum hinweg durchgeführt werden.

Eine anaerobe Fermentation kann durch Verminderung des Sauerstoffpartialdruckes und/oder Sauerstoffentzug und/oder Beschickung mit einem nicht sauerstoffhaltigen Gas bzw. Gasgemisch erreicht werden. Für eine Begasung eignet sich insbesondere ein Inertgas, wie z.B. Stickstoff.

An die anaerobe Fermentation kann eine aerobe Nachbehandlung angeschlossen werden. Diese sollte vorzugsweise mindestens ca. 3 Monate dauern. Dabei gilt in Grenzen der Grundsatz: Je länger die aerobe Nachbehandlung durchgeführt wird, desto feiner und hochwertiger wird die verarbeitbare Masse.

Das Homogenisieren sollte mindestens bis zu ca. 10 Mal wiederholt werden. Je häufiger der Homogenisierungsschritt wiederholt wird, desto bessere Eigenschaften weist das Endprodukt auf.

Das Vermischen von Bioplast mit den tierischen und/oder menschlichen Ausscheidungsprodukten, die oben genauer ausgeführt wurden und dem mindestens einen Wildabweisungsmittel kann durch jegliche im Stand der Technik bekannte Mischvorrichtung erreicht werden.

Hierbei kann das Wildabweisungsmittel, wie bereits oben ausgeführt, ein synthetisches oder ein natürliches Wildabweisungsmittel sein, wildabweisende Geruchsstoffe, wildabweisende Geschmacksstoffe, ein für Wild unverträglicher Stoff und/oder Mischungen daraus enthalten und bevorzugt ausgewählt sein aus Repellentien, Tierbestandteilen, insbesondere Tierepithelien, wie Federn, Fischbestandteilen, Säugetierhaaren, einschließlich menschlicher Haare, insbesondere Hunde-, Wolfs- oder Bärenhaare oder deren Mischungen.

Die Mischung erfolgt bevorzugt mit den Rührvorrichtungen und Rotationsmischvorrichtungen, die im Stand der Technik bekannt sind.

In einer weiteren bevorzugten Ausführungsform der vorliegenden Erfindung wird in dem erfindungsgemäßen Verfahren der Langzeitdüngermischung weiterhin mindestens ein Zuschlagsstoff zugesetzt.

Diese Zufügung kann einerseits erfolgen, nachdem die Grundmischung des erfindungsgemäßen Langzeitdüngers bereits fertiggestellt wurde. Dies würde einen zusätzlichen Mischvorgang erfordern.

Andererseits kann der mindestens eine Zuschlagsstoff den Grundbestandteilen das Langzeitdüngers auch vor dem Mischen zugefügt werden, so daß nur ein Mischvorgang erforderlich ist.

Ebenfalls ist die Hinzufügung der tierischen Ausscheidungsprodukte und des wenigstens einem Wildabweisungsmittel und gegebenenfalls des mindestens einen Zuschlagsstoffes direkt in die Bioplastherstellung denkbar.

Dies vereinfacht das Herstellungsverfahren und erlaubt eine "one-pot"-Umsetzung.

Als Zuschlagsstoff können Tierbestandteile, mineralische Bestandteile, pflanzliche Bestandteile, synthetische Bestandteile oder Mischungen daraus der Langzeitdüngergrundzusammensetzung hinzugefügt werden, wobei der Zuschlagsstoff bevorzugt ausgewählt ist aus Tierepithelien wie Federn, Fischbestandteilen, Säugetierhaaren, einschließlich menschlicher Haare, insbesondere Hunde-, Wolfs- oder Bärenhaare, Steinmehl, Tonmehl, faserhaltigen Materialien, vorzugsweise Holzwolle, Flachs, Bananenfaser, Wollstaub, Kokos, Sisal, Baumfasern, Zweige, Blätter, Nadeln, Wurzeln, Früchte, Stengel, Schalen, Schoten, Blüten, Knollen, Rinde, Holz, Mark, Gräser, Unkraut und/oder Pflanzenfasern, feinkörnigen Materialien, insbesondere Holzmehl und/oder Sägemehl oder Wachs, Stärke, Öl, Harz, Zucker, Torf, Muschelschalen, Latex-Stoff oder, Klebemitteln, Bindemitteln, Konservierungsmitteln, insbesondere einer organischen Säure, vorzugsweise Essigsäure, Zitronensäure, Weinsäure, Ameisensäure, Milchsäure, Propionsäure, Benzoesäure, Sorbinsäure, Salicylsäure, Trägermaterialien oder Mischungen daraus.

Optional können die Bestandteile des langzeitdüngers zu jedem Zeitpunkt des Verfahrens zusätzlich zerkleinert werden.

Weiterhin kann die Langzeitdüngermischung zusätzlich eingedickt werden. Dies kann durch jedes im Stand der Technik bekannte Eindickungsverfahren geschehen, daß die Qualität des Langzeitdüngers nicht nachteilig beeinflußt.

Gegebenenfalls kann ein Bindemittel zugesetzt werden.

Gemäß einer weiteren bevorzugten Ausführungsform des vorliegenden erfindungsgemäßen Verfahrens wird die eingedickte Langzeitdüngermischung in eine streufähige Form gebracht.
Dies geschieht bevorzugt durch Granulieren, Pelletieren, Extrudieren, Spritzen und/oder Pressen.

Eine weitere bevorzugte Ausführungsform des vorliegenden erfindungsgemäßen Verfahrens ist dadurch gekennzeichnet, daß das Langzeitdüngerendprodukt getrocknet wird.

Die Trocknung kann durch jedes im Stand der Technik bekannte Verfahren erfolgen, das die Qualität des Endproduktes nicht nachteilig beeinflußt.

Hierdurch wird eine Gewichtsverminderung und eine erhöhte Lagerbeständigkeit erzielt.

Bevorzugt erfolgt das Trocknen mit Heißluft auf einem Rost, durch einen Schütteltrockner oder durch einen Wirbelschichttrockner.

Zur Lagerung wird der erfindungsgemäße Langzeitdünger bevorzugt geruchsdicht verpackt. Bevorzugt ist hierbei das Einschweißen in Kunststoffsäcke.

Eine weitere Ausführungsform der vorliegenden Erfindung ist ein Verfahren zum Düngen und zum gleichzeitigen Schützen von Grünpflanzen vor Wildverbiß, dadurch gekennzeichnet, daß es das Aufbringen des erfindungsgemäßen Langzeitdüngers an die Grünpflanzen selbst und/oder auf ihre unmittelbare Umgebung umfaßt.

Liegt der Dünger beispielsweise in streichfähiger Form vor, so kann er beispielsweise auf Baumstämme gestrichen werden, so daß der Regen nach und nach Düngemittel freisetzt und die wildabweisende Wirkung direkt an der bedrohten Stelle ausgeübt wird.

In streufähiger Form wird der Dünger bevorzugt auf die unmittelbare Umgebung der Grünpflanzen gestreut, so daß sich die Düngemittelwirkung optimal entfalten kann und die wildabweisende Wirkung sich auf den Bereich erstreckt, der vom Wild besonders bedroht ist.

Weitere Vorteile und Merkmale der vorliegenden Erfindung ergeben sich aufgrund der Beschreibung von Ausführungsbeispielen.

### Ausführungsbeispiel 1, Herstellung von Bioplast

### Variante A

20 kg gehäckselter Mais, 10 kg gehäckselte Zweige und 10 kg Gras wurden vermischt und in einen Plastiksack gefüllt. Der Plastiksack wurde zur anaeroben Fermentation unter Anlegung von Unterdruck evakuiert und luftdicht verschlossen. Nach 14 Tagen wurde die erhaltene faserhaltige und torfartige Masse 10 mal homogenisiert. Die Ausbeute an verarbeitbarer Masse betrug ca. 20 kg.

Eine lichtmikroskopische Untersuchung deutete darauf hin, daß die erhaltene Masse vorwiegend aus Zellwandbestandteilen zu bestehen scheint.

### Variante B

20 kg Blätter und 20 kg gehäckselte Zweige wurden vermischt und in eine Tonne gefüllt. Die Tonne wurde mit einem Deckel verschlossen und die in der Tonne enthaltene Luft wurde herausgedrückt, worauf die Tonne luftdicht verschlossen wurde. Nach drei Wochen langer anaerober Fermentierung wurde die Tonne geöffnet, deren Inhalt in eine gut belüftete Kiste umgeschüttet und drei Monate lang stehen gelassen um eine aerobe Nachbehandlung zu durchlaufen. Anschließend wurde die Masse fünf mal homogenisiert. Die Ausbeute an verarbeitbarer Masse betrug ca. 15 kg.

### Variante C

10 kg gehäckselter Mais, 10 kg gehäckselte Zweige und 10 kg zerkleinerte Hühnerfedern wurden vermischt und in einen Behälter gefüllt. Nach Zugabe von 2 Litern Wasser, um das Ausgangsmaterial anzufeuchten, wurde der Behälter zur Entfernung von Sauerstoff mit Stickstoff begast und luftdicht verschlossen. Nach 18 Tagen anaerober Gärung wurde der Behälter geöffnet, ca. ein Liter 30 %ige Essigsäure zur Konservierung zugemischt, und die erhaltene Masse 8 mal homogenisiert. Die Ausbeute an verarbeitbarer Masse betrug ca. 12 kg.

**Ausführungsbeispiel 2, Anmischung und fertigstellung eines Langzeitdüngers**

| | |
|---|---|
| 10 kg | Bioplast |
| 100 kg | Gülle |
| 10 kg | gemischte Hunde-, Wolfs- und Menschenhaare |
| 5 kg | Sägemehl |
| 20 kg | Steinmehl |

wurden in einem Trommelmischer 2 h lang bei 20 U/min bei Raumtemperatur gemischt, nachdem der Haarbestandteil vorher auf eine Partikellänge von 5 mm zerkleinert wurde.

Die resultierende Langzeitdüngermischung wird anschließend durch Zugabe von weiteren 5 kg Sägemehl eingedickt.

Die eingedickte Masse wird dann auf eine Partikelgröße von 5 mm granuliert, bevor das Granulat in einem Wirbelschichttrockner 2 h bei 60 °C getrocknet wird.

Dieser fertige wildabweisende Langzeitdünger wird schließlich geruchsdicht in 20 kg Portionen in Kunststoffsäcke eingeschweißt.

### Ausführungsbeispiel 3, Wildverbiß am Ausbringungsort Groß Buchholz

Am Ausbringungsort Groß Buchholz z wurden im Frühjahr auf einer Maisfläche mit Einsaat Wintergetreide 2 x 5L Eimer des erfindungsgemäßen Langzeitdüngers ausgebracht.

Die gesamte Austragungsfläche betrug ca. 500 m².

Es wurde festgestellt, daß die Fläche mit sofortiger Wirkung des erfindungsgemäßen Langzeitdüngers vom Wild gemieden wurde.

Am Ausbringungsort Groß Buchholz war nach erfindungsgemäßer Anwendung des Langzeitdüngers kein Wildschaden festzustellen.

### Ausführungsbeispiel 4, Wildverbiß am Ausbringungsort Lenzersilge

Am Ausbringungsort Lenzersilge wurden im Frühjahr auf einer Fläche von frisch gelegtem Mais 2 x 5L Eimer des erfindungsgemäßen Langzeitdüngers ausgebracht.

Die gesamte Austragungsfläche betrug ca. 500 m².

Es wurde festgestellt, daß die Fläche trotz hoher Wildbestände vom Wild gemieden wurde.

Am Ausbringungsort Lenzersilge wechselten am 6. Tag nach der Ausbringung Schwarzwild über die Fläche, es entstand jedoch kein Schaden. Außerhalb der behandelten Fläche waren jedoch starke Schäden zu erkennen.

### Ausführungsbeispiel 5, Wildverbiß am Ausbringungsort Ferbitz

Am Ausbringungsort Ferbitz wurden im Frühjahr auf einer Fläche mit frisch ausgelegtem Mais 2 x 5L Eimer des erfindungsgemäßen Langzeitdüngers ausgebracht.

Die gesamte Austragungsfläche betrug ca. 500 m².

Es wurde festgestellt, daß die Fläche gänzlich von Schwarzwild gemieden wurde.

Auf dem Rest der Fläche, der nicht mit dem erfindungsgemäßen Langzeitdünger behandelt worden war, war jedoch ein Totalschaden zu erkennen.

### Ausführungsbeispiel 6, Wildverbiß am Ausbringungsort Leipzig

Am Ausbringungsort Leipzig wurden im Winter auf einem Lindenacker Maisfläche mit Einsaat Wintergetreide 2 x 5L Eimer des erfindungsgemäßen Langzeitdüngers ausgebracht.

Die gesamte Austragungsfläche betrug ca. 500 m².

Die Fläche wurde nach ca. 1 Woche vereinzelt durch Schwarzwild angenommen, zeigte jedoch nach ca. 3 Wochen keine Wirkung.

### Ausführungsbeispiel 7, Wildverbiß in Schweden

In Schweden wurden im Winter auf dem Ausbringungsort Lindenacker Maisfläche mit Einsaat Wintergetreide 2 x 5L Eimer des erfindungsgemäßen Langzeitdüngers ausgebracht.

Die gesamte Austragungsfläche betrug ca. 500 m².

Es wurde festgestellt, daß die Fläche generell von Schwarzwild gemieden wurde.

Im Frühjahr, am Ende der Kontrolle ca. 3 Monate nach der Ausbringung, war kein Wildschaden zu erkennen.

## Patentansprüche

1. Langzeitdünger/Bodenverbesserer enthaltend tierische Ausscheidungsprodukte und eine Masse aus vorwiegend pflanzlichem Ausgangsmaterial, welche durch Zerkleinern des Augangsmaterials, wenigstens überwiegend anaerobes Fermentieren des zerkleinerten Ausgangsmaterials, Homogenisieren des fermentierten Materials und Eindicken erhältlich ist,
**dadurch gekennzeichnet, daß**
er wenigstens ein Wildabweisungsmittel enthält.

2. Langzeitdünger gemäß Anspruch 1, **dadurch gekennzeichnet, daß** das Wildabweisungsmittel ein synthetisches Wildabweisungsmittel oder ein natürliches Wildabweisungsmittel, ist.

3. Langzeitdünger gemäß Anspruch 2, **dadurch gekennzeichnet, daß** das synthetische Wildabweisungsmittel zur Klasse der Repellentien gehört.

4. Langzeitdünger gemäß Anspruch 2, **dadurch gekennzeichnet, daß** das natürliche Wildabweisungsmittel Tierbestandteile, insbesondere Tierepithelien, wie Federn, Fischbestandteile, Säugetierhaare, einschließlich menschlicher Haare, insbesondere Hunde-, Wolfs- oder Bärenhaare oder Mischungen daraus sind.

5. Langzeitdünger gemäß Anspruch 1-4, **dadurch gekennzeichnet, daß** das Wildabweisungsmittel wildabweisende Geruchsstoffe, wildabweisende Geschmacksstoffe, für das Wild unverträgliche Stoffe, insbesondere nicht schwermetallbelastete Klärschlämme oder Mischungen daraus enthält.

6. Langzeitdünger gemäß Anspruch 1-5, **dadurch gekennzeichnet, daß** er weiterhin mindestens einen Zuschlagsstoff enthält.

7. Langzeitdünger gemäß Anspruch 6, **dadurch gekennzeichnet, daß** der Zuschlagsstoff Tierbestandteile, mineralische Bestandteile, pflanzliche Bestandteile, synthetische Bestandteile oder Mischungen daraus enthält.

8. Langzeitdünger gemäß Anspruch 7, **dadurch gekennzeichnet, daß** die Tierbestandteile insbesondere Tierepithelien wie Federn, Fischbestandteile, Säugetierhaare, einschließlich menschliche Haare, insbesondere Hunde-, Wolfs- oder Bärenhaare oder Mischungen daraus umfassen.

9. Langzeitdünger gemäß Anspruch 7-8, **dadurch gekennzeichnet, daß** die mineralischen Bestandteile Steinmehl, Tonmehl, Kieselgur, insbesondere mit Produkten aus der Bierherstellung beladenem Kieselgur oder Mischungen daraus enthalten.

10. Langzeitdünger gemäß Anspruch 7-9, **dadurch gekennzeichnet, daß** die pflanzlichen Bestandteile faserhaltige Materialien, vorzugsweise Holzwolle, Flachs, Bananenfaser, Kokos, Sisal, Baumfasern, Zweige, Blätter, Nadeln, Wurzeln, Früchte, Stengel, Schalen, Schoten, Blüten, Knollen, Rinde, Holz, Mark, Gräser, Unkraut und/oder Pflanzenfasern
feinkörnige Materialien, insbesondere Holzmehl und/oder Sägemehl, oder
weitere Materialien wie Wollstaub, Wachs, Stärke, Öl, Harz, Zucker, Torf, Muschelschalen und/oder Latex-Stoff
oder Mischungen daraus enthalten.

11. Langzeitdünger gemäß Anspruch 4-10, **dadurch gekennzeichnet, daß** die synthetischen Bestandteile Klebemittel, Bindemittel, Konservierungsmittel, Trägermaterialien oder Mischungen daraus enthalten.

12. Langzeitdünger gemäß Anspruch 11, **dadurch gekennzeichnet, daß** das Konservierungsmittel eine organische Säure, vorzugsweise Essigsäure, Zitronensäure, Weinsäure, Ameisensäure, Milchsäure, Propionsäure, Benzoesäure, Sorbinsäure, Salicylsäure, sowie deren Mischungen umfaßt.

13. Langzeitdünger gemäß einem der Ansprüche 1-12, **dadurch gekennzeichnet, daß** er biologisch abbaubar ist.

14. Langzeitdünger gemäß einem der Ansprüche 1-13, **dadurch gekennzeichnet, daß** er als Streudünger, insbesondere in der Form eines Granulates vorliegt.

15. Langzeitdünger gemäß Anspruch 1-14, **dadurch gekennzeichnet, daß** er ein Rieselhilfsmittel, vorzugsweise Asche, Steinmehl oder andere trockene, mineralische Mehle oder Sand umfaßt.

16. Langzeitdünger gemäß Anspruch 14-15, **dadurch gekennzeichnet, daß** der Streudünger eine Pelletgröße mit einem Durchmesser von ca. 0.1 mm - 5 cm, vorzugsweise von ca. 1 mm bis 1 cm aufweist.

17. Verwendung eines Langzeitdüngers nach einem der Ansprüche 1-16 zum Düngen und/oder zur Einschränkung oder Verhinderung von Wildverbiß bei Grünpflanzenkulturen, wie Wäldern, insbesondere bei Anpflanzungen, bei Jungpflanzen sowie bei der Pflanzenaufzucht, insbesondere in schwer zugänglichen Regionen, wie im Hochgebirge.

18. Verfahren zur Herstellung eines Langzeitdüngers nach einem der Ansprüche 1-16, die folgenden Schritte umfassend:
- Herstellen einer Masse aus vorwiegend pflanzlichem Ausgangsmaterial, die folgenden Schritte umfassend:
- Zerkleinern des Ausgangsmaterials,
- wenigstens überwiegendes anaerobes Fermentieren des zerkleinerten, gegebenenfalls angefeuchteten Materials und
- Homogenisieren des fermentierten Materials, um die Masse zu erhalten, und
- Mischen der Masse aus vorwiegend pflanzlichem Ausgangsmaterial mit den tierischen Ausscheidungsprodukten und wenigstens einem Wildabweisungsmittel.

19. Verfahren gemäß Anspruch 18, **dadurch gekennzeichnet, daß** der Mischung weiterhin mindestens ein Zuschlagsstoff zugesetzt wird.

20. Verfahren gemäß Anspruch 18, **dadurch gekennzeichnet, daß** das Wildabweisungsmittel ein synthetisches Wildabweisungsmittel oder ein natürliches Wildabweisungsmittel ist, wildabweisende Geruchsstoffe, wildabweisende Geschmacksstoffe, für Wild unverträgliche Stoffe und/oder Mischungen daraus enthält und bevorzugt ausgewählt ist aus Repellentien, Tierbestandteilen, insbesondere Tierepithelien, wie Federn, Fischbestandteilen, Säugetierhaaren, einschließlich menschlicher Haare, insbesondere Hunde-, Wolfs- oder Bärenhaare oder deren Mischungen.

21. Verfahren gemäß Anspruch 19, **dadurch gekennzeichnet, daß** der Zuschlagsstoff Tierbestandteile, mineralische Bestandteile, pflanzliche Bestandteile, synthetische Bestandteile oder Mischungen daraus enthält, wobei der Zuschlagsstoff bevorzugt asugewählt ist aus Tierepithelien wie Federn, Fischbestandteilen, Säugetierhaaren, einschließlich menschlicher Haare, insbesondere Hunde-, Wolfs- oder Bärenhaare, Steinmehl, Tonmehl, faserhaltigen Materialien, vorzugsweise Holzwolle, Flachs, Bananenfaser, Kokos, Sisal, Baumfasern, Zweige, Blätter, Nadeln, Wurzeln, Früchte, Stengel, Schalen, Schoten, Blüten, Knollen, Rinde, Holz, Mark, Gräser, Unkraut und/oder Pflanzenfasern, feinkörnigen Materialien, insbesondere Holzmehl und/oder Sägemehl oder Wollstaub, Wachs, Stärke, Öl, Harz, Zucker, Torf, Muschelschalen, Latex-Stoff oder, Klebemitteln, Bindemitteln, Konservierungsmitteln, insbesondere einer organischen Säure, vorzugsweise Essigsäure, Zitronensäure, Weinsäure, Ameisensäure, Milchsäure, Propionsäure, Benzoesäure, Sorbinsäure, Salicylsäure, Trägermaterialien oder Mischungen daraus umfaßt.

22. Verfahren gemäß Anspruch 18-21, **dadurch gekennzeichnet, daß** es weiterhin den Schritt des Zerkleinerns der Bestandteile des Langzeitdüngers umfaßt.

23. Verfahren gemäß Anspruch 18-22, **dadurch gekennzeichnet, daß** die Langzeitdüngermischung weiterhin eingedickt wird.

24. Verfahren gemäß Anspruch 23, **dadurch gekennzeichnet, daß** die eingedickte Langzeitdüngermischung in eine streufähige Form gebracht wird, so wie durch Granulieren, Pelletieren, Extrudieren, Spritzen und/oder Pressen und das optional ein Rieselhilfsmittel, vorzugsweise Asche, Steinmehl oder andere trockene, mineralische Mehle oder Sand zugesetzt wird.

25. Verfahren gemäß Anspruch 18-24, **dadurch gekennzeichnet, daß** das Langzeitdüngerendprodukt getrocknet wird.

26. Verfahren gemäß Anspruch 25, **dadurch gekennzeichnet, daß** das Trocknen mit Heißluft auf einem Rost erfolgt.

27. Verfahren zum Düngen und zum gleichzeitigen Schützen von Grünpflanzen vor Wildverbiß, **dadurch gekennzeichnet, daß** es das Aufbringen des Langzeitdüngers nach Anspruch 1-16 an die Grünpflanzen selbst und/oder auf ihre unmittelbare Umgebung umfaßt.
